# EUROPEAN PATENT APPLICATION

(11) **EP 1 870 707 A1**
(43) Date of publication of application: **26.12.2007**
(21) Application number: 06729383.7
(22) Date of filing: 17.03.2006
(51) Int. Cl.: G01N 30/46

(54) **PSEUDO MOVING BED TYPE CHROMATOGRAPHIC SEPARATING DEVICE**

(30) Priority: 18.03.2005 JP 2005078424
(71) Applicant: DAICEL CHEMICAL INDUSTRIES, LTD., Osaka-shi, Osaka 530-0001 (JP)
(72) Inventor: MINODA, Toshiharu, 1-1, Shinko-cho, Myoko-shi, Niigata, 944 (JP)
(74) Representative: Grünecker, Kinkeldey, Stockmair & Schwanhäusser Anwaltssozietät
(86) International application number: PCT/JP2006/305394
(87) International publication number: WO 2006/101046

(57) **Abstract**

An simulated moving bed chromatographic separation device (SMB device), comprising an endless flow passage (2) formed with four columns (1a) to (1d) and connecting flow passages (2a) to (2d) connecting the columns (1a) to (1d) in series, and third and fourth flow passages (5) and (6) for discharging a mobile phase from any position of the endless flow passage (2). Regulators (5d) and (6d) and flow control valves (5e) and (6e) as flow rate adjusters for opening and closing main pipes (5a) and (6a) on the downstream side of the regulators (5d) and (6d) are provided each of in the third and fourth flow passages (5) and (6). Thus, the discharge of the mobile phase from the endless flow passage (2) can be controlled by a simple and highly durable structure.

## Description

### Technical Field

The present invention relates to a simulated moving bed chromatographic separation device (hereinafter, also referred to as "SMB device") capable of continuously taking out a mobile phase containing a target substance, and more particularly, to an SMB device capable of controlling a flow rate of a mobile phase to be taken out.

### Background Art

An SMB device is capable of continuously supplying a sample containing a target substance to a column, and is also capable of separating the target substance and continuously discharging a mobile phase containing the target substance. Therefore, the SMB device is suitably used for producing a predetermined substance by fractionation.

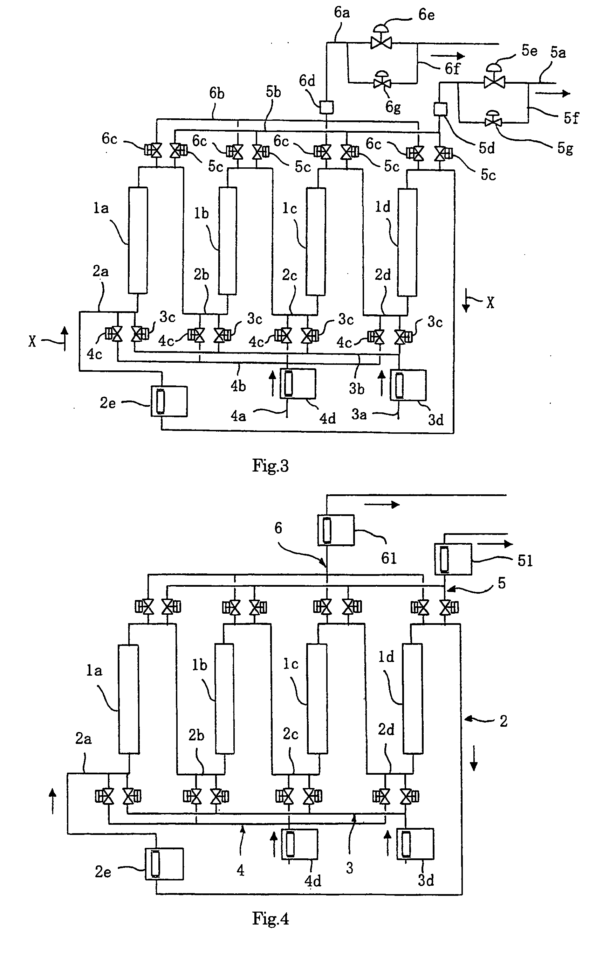

As such an SMB device, for example, as shown in FIG. 4, there is known a device which includes: an endless flow passage 2 formed with a plurality of columns 1a to 1d for separating a target substance in a sample containing the target substance and connecting flow passages 2a to 2d connecting the columns 1a to 1d in series; a first flow passage 3 capable of being connected to any one of the connecting flow passages in the endless flow passage 2, for supplying a mobile phase to the endless flow passage 2; a second flow passage 4 capable of being connected to any one of the connecting flow passages in the endless flow passage 2, for supplying a sample to the endless flow passage 2; third and fourth flow passages 5, 6 capable of being connected to any one of the connecting flow passages in the endless flow passage 2, for discharging a mobile phase from the endless flow passage 2; a circulating pump 2e for circulating a liquid such as a mobile phase in the endless flow passage 2; a mobile phase pump 3d for supplying a mobile phase at a desired flow rate from the first flow passage 3 to the endless flow passage 2; a stock solution pump 4d for supplying a sample at a desired flow rate from the second flow passage 4 to the endless flow passage 2; a product pump 51 for discharging a mobile phase at a desired flow rate from the endless flow passage 2 to the third flow passage 5; and a product pump 61 for discharging a mobile phase at a desired flow rate from the endless flow passage 2 to the fourth flow passage.

As the product pumps 51, 61, for example, piston reciprocating pumps capable of automatically controlling a flow rate are used.

In the above-mentioned SMB device, in accordance with the supply of a mobile phase to the endless flow passage and the circulation of a mobile phase in the endless flow passage, pulsation of the mobile phase may occur in the endless flow passage.

However, in the case of using the above-mentioned pumps, for example, by variably controlling a rotation speed of a motor of at least one pump based on an average value of a pressure detection value of a pressure detection device provided at a certain point of the endless flow passage, the pressure of the endless flow passage can be kept constant, and the mobile phase can be discharged quantitatively from the endless flow passage. Thus, the discharge of the mobile phase by the pumps is excellent in stably discharging the mobile phase at a desired flow rate from the endless flow passage while suppressing a variation in pressure of the endless flow passage, in the case where pulsation of the mobile phase occurs in the endless flow passage.

However, the above-mentioned pumps have high performance and are expensive. Further, when the operation of the pumps is controlled as described above, the pumps are consumed earlier.

Therefore, in the above-mentioned SMB device, a reduction in number of the pumps to be used is also considered. As such an SMB device, there is known, for example, a device in which flow rate control means such as the above-mentioned pump is provided in either one of the third and fourth flow passages, and back pressure applying means for applying a constant back pressure which is predetermined for the endless flow passage is provided in the other flow passage (for example, see Patent Document 1).

In the SMB device, the number of the pumps to be used can be reduced from two to one. However, the SMB device is susceptible of consideration in terms of precise control of a discharge amount of a mobile phase in a flow passage in which the back pressure applying means is provided.

Further, as a device that quantitatively discharges a fluid from a circulation path in which the pressure varies, there is known a fluid supply system which includes a supply pipe portion connected to the circulation path, metering pumps provided in the supply pipe portion, and regulators provided to upstream of the metering pumps in the supply pipe portion (for example, see Patent Document 2).

In the fluid supply system, irrespective of the variation in pressure in the circulation path, the pressure of the supply pipe portion on a downstream side of the regulators is kept to be a set pressure by the regulators, and the regulators are opened when the upstream of the pumps (downstream of the regulators) becomes a negative pressure periodically with respect to the set pressure due to the operation of reciprocating pumps, whereby a fluid is supplied from the circulation path. Thus, the above-mentioned system is excellent in that a fluid is discharged quantitatively from the circulation path by the metering pumps without being influenced by the variation in pressure of the circulation path.

However, in the above-mentioned system, since the regulators are opened/closed using the pulsation of the metering pumps, the number of the metering pumps to be used cannot be reduced. Therefore, in the above-mentioned system, problems regarding costs involved in the use of the metering pumps and durability need more consideration.
Patent Document 1: Specification of JP 2962589 B
Patent Document 2: JP 2004-27905 A

### Disclosure of the Invention

The present invention provides a technique of controlling a discharge of a mobile phase from an endless flow passage with a simple structure excellent in durability in an SMB device.

The present invention provides means capable of controlling a discharge amount of a mobile phase from the endless flow passage with a relatively simple and inexpensive structure even without using an expensive flow rate control pump.

In other words, the present invention provides an SMB device comprising: an endless flow passage comprising a plurality of columns for separating a target substance in a sample containing the target substance and connecting flow passages for connecting the columns in series; a first flow passage capable of being connected to any one of the connecting flow passages in the endless flow passage, for supplying a mobile phase to the endless flow passage; a second flow passage capable of being connected to any one of the connecting flow passages in the endless flow passage, for supplying the sample to the endless flow passage; and a third flow passage and a fourth flow passage capable of being connected to any one of the connecting flow passages in the endless flow passage, for discharging the mobile phase from the endless flow passage, the simulated moving bed chromatographic separation device being used for obtaining the target substance by discharging a mobile phase containing the target substance from the endless flow passage via one of or both of the third flow passage and the fourth flow passage, in which: in a case where the endless flow passage side is set to upstream of the third flow passage and the fourth flow passage, the simulated moving bed chromatographic separation device further comprises: a regulator provided to each of the third flow passage and the fourth flow passage, for regulating a pressure of the third flow passage or the fourth flow passage; and a flow rate control device provided to each of the third flow passage and the fourth flow passage, for controlling a flow rate of the mobile phase in the third flow passage or the fourth flow passage downstream of the regulator; the regulator serves as a device for opening/closing the third flow passage or the fourth flow passage so that the pressure of the third flow passage or the fourth flow passage downstream of the regulator becomes a pressure set in advance; and the flow rate control device serves as a device comprising a flow rate adjuster for adjusting an opening degree of the third flow passage or the fourth flow passage downstream of the regulator, for adjusting the opening degree of the third flow passage or the fourth flow passage by the flow rate adjuster so that the flow rate of the mobile phase in the third flow passage or the fourth flow passage downstream of the flow rate adjuster becomes a flow rate set in advance.

According to the above-mentioned structure, a mobile phase is supplied to the third and fourth flow passages downstream of the regulator so that a pressure becomes constant, whereby, in any of the third and fourth flow passages, the flow rate of the mobile phase can be controlled to a desired flow rate in accordance with the opening degree of the third and fourth flow passages by the flow rate adjuster. Thus, a balance between the mobile phase and the sample supplied to the endless flow passage, and the mobile phase discharged from the endless flow passage can be controlled precisely with a simple inexpensive structure.

In addition to the above-mentioned device, the present invention provides an SMB device further comprising a bypass flow passage for connecting the third flow passage or the fourth flow passage between the regulator and the flow rate adjuster to the third flow passage or the fourth flow passage downstream of the flow rate adjuster, and a bypass flow rate adjuster for adjusting an opening degree of the bypass flow passage, provided one of or both of the third flow passage and the fourth flow passage, in which the flow rate control device serves as a device for further adjusting the opening degree of the bypass flow passage with the bypass flow rate adjuster so that the flow rate of the mobile phase in the third flow passage or the fourth flow passage downstream of a downstream connection position of connecting positions of the third flow passage or the fourth flow passage and the bypass flow passage becomes the flow rate set in advance.

According to the above-mentioned structure, further, the flow rate of the mobile phase in the third or fourth flow passage downstream of the regulator can be controlled by the control of a flow rate of a mobile phase in the third or fourth flow passage by the flow rate adjuster and by the control of a flow rate of a mobile phase in the bypass flow passage by the bypass flow rate adjuster.

In addition to the above-mentioned device, the present invention provides an SMB device further comprising: a concentrator for concentrating the mobile phase in the third flow passage and the fourth flow passage corresponding to the third flow passage and the fourth flow passage; and a regulating device for regulating a composition of a condensate of vapor of the mobile phase obtained in the concentrator to a composition of the mobile phase, in which a mobile phase regulated in the regulating device is supplied to the first flow passage.

According to the above-mentioned structure, further, a mobile phase can be collected and reused.

In addition to the above-mentioned device, the present invention provides an SMB device, in which the target substance comprises an optical isomer; the column has a separating agent comprising a polysaccharide derivative for separating the optical isomer from a mixture of the optical isomer; and the polysaccharide derivative is selected from the group consisting of an ester derivative of cellulose, an ester derivative of amylose, a carbamate derivative of cellulose, and a carbamate derivative of amylose.

According to the above-mentioned structure, further, an optical isomer used in medicines whose management in a process of production is strictly stipulated can be produced stably.

According to the present invention, the SMB device comprising the endless flow passage and the first to fourth flow passages, for obtaining the target substance by discharging the mobile phase containing the target substance from the endless flow passage via one of or both of the third and fourth flow passages, further comprises the regulator and the flow rate control device, whereby the discharge of the mobile phase from the endless flow passage can be controlled with a simple and inexpensive structure excellent in durability without using a metering pump in the SMB device.

Further, in the present invention, when the device further comprises the bypass flow passage and the bypass flow rate adjuster, the control of a flow rate of a mobile phase in the third or fourth flow passage and the control of a flow rate of a mobile phase in the bypass flow passage can be performed in parallel. Therefore, it is more effective in terms of precise control of a flow rate of a mobile phase.

Further, in the present invention, when the device further comprises a device that collects a mobile phase from the third and fourth mobile phases and reuse it as a mobile phase supplied to the endless flow passage, the mobile phase can be reused. Therefore, it is more effective in terms of the reduction in a use amount of a mobile phase.

Further, in the present invention, when a column having, as a separating agent, a polysaccharide derivative for separating an optical isomer from a mixture of the optical isomer is used, the optical isomer can be separated at a high efficiency. Therefore, it is more effective in producing an optical isomer as a product requiring strict quality management with high productivity and with stability.

### Brief Description of the Drawings

FIG. 1 is a diagram schematically showing an entire structure of an SMB device according to one embodiment of the present invention.
FIG. 2 is a diagram showing a peripheral structure of an endless flow passage 2 of the SMB device according to one embodiment of the present invention.
FIG. 3 is a diagram showing a peripheral structure of an endless flow passage 2 of an SMB device according to another embodiment of the present invention.
FIG. 4 is a diagram showing a peripheral structure of an endless flow passage 2 of a conventional SMB device.

### Description of Symbols

- 1a to 1d: column
- 2: endless flow passage
- 2a to 2d: connecting flow passage
- 2e: circulating pump
- 3: first flow passage
- 3a to 6a: main pipe
- 3b to 6b: branch pipe
- 3c to 6c: valve
- 3d: mobile phase pump
- 4: second flow passage
- 4d: stock solution pump
- 5: third flow passage
- 5d, 6d: regulator
- 5e, 6e: flow rate control valve
- 5f, 6f: bypass pipe
- 5g, 6g: bypass flow rate control valve
- 6: fourth flow passage
- 7a to 7c, 9a to 9c: evaporator
- 8, 10: reservoir tank
- 11: collecting tank
- 12: regulating device
- 13: mobile phase supply flow passage
- 51, 61: product pump
- X: arrow indicating a direction of allowing fluid in the endless flow passage 2 to flow

### Best Mode for carrying out the Invention

An SMB device of the present invention comprises an endless flow passage, first to fourth flow passages capable of being connected to any portion of the endless flow passage, regulators for regulating a pressure of the third or fourth flow passage, which are placed respectively in the third and fourth flow passage assuming that the endless flow passage side is set to an upstream of the third and fourth flow passages, and a flow rate control device for controlling a flow rate of a mobile phase in the third or fourth flow passage downstream of the regulators.

The endless flow passage is formed with a plurality of columns and connecting flow passages connecting the columns in series. Although the number of the columns provided in the endless flow passage is not particularly limited, so long as a plurality of columns are provided, the number is preferably 4 to 24, and more preferably 4 to 8.

The column is not particularly limited, so long as it is a column capable of separating a target substance in a sample containing the target substance. As the column, an ordinary column having a column pipe and a separating agent for separating a target substance received in the column pipe can be used.

The connecting flow passage is not particularly limited, so long as it is made of a member capable of connecting the columns in series and connecting other flow passages. The connecting flow passage can be composed of known members such as a pipe, a branch pipe, and an opening/closing valve generally used in an SMB device.

The first flow passage is not particularly limited, so long as it is a flow passage capable of being connected to any of the connecting flow passages in the endless flow passage, and capable of supplying a mobile phase to the endless flow passage. The first flow passage can be composed of known members such as a pipe, a branch pipe, an opening/closing valve, a pump, and a tank receiving a mobile phase which are generally used in an SMB device.

The second flow passage is not particularly limited, so long as it is a flow passage capable of being connected to any of the connecting flow passages in the endless flow passage and supplying a sample to the endless flow passage. The second flow passage can be composed of known members such as a pipe, a branch pipe, an opening/closing valve, a pump, and a supply source of a sample (for example, a tank receiving a sample or an injection device for a sample) which are generally used in an SMB device.

The third and fourth flow passages are not particularly limited, so long as they are flow passages capable of being connected to any of the connecting flow passages in the endless flow passage and discharging a mobile phase from the endless flow passage. The third and fourth flow passages can be composed of known members such as a pipe, a branch pipe, and a flow passage opening/closing device, e.g., a valve for opening/closing a flow passage at an arbitrary opening degree, which are generally used in an SMB device.

The connection of the first to fourth flow passages to any of the connecting flow passages in the endless flow passage can be performed by connecting all the first to fourth flow passages to all the connecting flow passages, opening any of the first to fourth flow passages, and closing the other flow passages, as generally conducted in an SMB device.

The connection positions of the first to fourth flow passages in the endless flow passage are not particularly limited so long as they are positions at which a mobile phase mainly containing a target substance is discharged from the third or fourth flow passage. The first to fourth flow passages are generally connected to the connecting flow passages in the endless flow passage in the order of the first flow passage, the third flow passage, the second flow passage, and the fourth flow passage in a flow direction of a mobile phase in the endless flow passage.

The connection intervals of the first to fourth flow passages in the endless flow passage may be equal or irregular. The connection intervals of the first to fourth flow passages in the endless flow passage can be appropriately determined depending upon various conditions such as the kind of a target substance in a sample, the number of set columns, and the kind of a separating agent.

The regulator is a device for opening/closing the third or fourth flow passage so that the pressure of the third or fourth flow passage downstream of the regulator becomes a pressure set in advance. The regulator is provided in each of the third and fourth flow passages. The regulator is not particularly limited so long as it is a device capable of keeping the pressure on a secondary side to be the predetermined set pressure irrespective of a variation in a pressure on a primary side. As the regulator, a device having a working pressure on the primary side of 0.5 to 20 MPa and having a settable pressure on the secondary side of 0.05 to 3 MPa is preferably used. An example of the regulator includes "KCY" series produced by Swagelok (Registered Trademark) Company.

The flow rate control device has a flow rate adjuster for adjusting the opening degree of the third or fourth flow passage downstream of the regulator, and adjusts the opening degree of the third or fourth flow passage by the flow rate adjuster so that the flow rate of a mobile phase in the third or fourth flow passage downstream of the flow rate adjuster becomes a flow rate set in advance.

The flow rate control device is not particularly limited so long as it directly or indirectly detects the flow rate of a mobile phase in the third or fourth flow passage downstream of the flow rate adjuster, and controls the flow rate adjuster in accordance with detection results.

Examples of the device that directly or indirectly detects the flow rate of a mobile phase in the third or fourth flow passage downstream of the flow rate adjuster include a flowmeter for detecting the flow rate of a mobile phase in the third or fourth flow passage downstream of the flow rate adjuster, and a pressure gauge for detecting the pressure of the third or the fourth flow passage between the regulator and the flow rate adjuster. An example of the device that controls the flow rate adjuster in accordance with the detection results includes a known control device for outputting a signal on an operation amount in accordance with a signal of the detection results to be input to allow a desired operation to be performed.

As the flowmeter, a known instrument capable of detecting the flow rate of a liquid in a pipe can be used. As the pressure gauge, a known instrument capable of detecting the positive pressure in a pipe can be used.

The flow rate adjuster is provided in each of the third and fourth flow passages. The flow rate adjuster is not particularly limited, so long as it is an instrument capable of adjusting the opening degree of the third or fourth flow passage so that the flow rate of a mobile phase in the third or fourth flow passage is set to be a desired flow rate. Examples of the flow rate adjuster include a flow rate adjusting valve that adjusts the opening degree of a valve to keep the flow rate of a fluid in a flow passage to be a predetermined value, and a flow rate setting unit of a rotation selection system, which has a plurality of orifices that can be placed in a flow passage of a fluid and selects an orifice corresponding to a predetermined flow rate from those orifices to place it in the flow passage of the fluid.

The SMB device of the present invention may further comprise a bypass flow passage and a bypass flow rate adjuster that adjusts the opening degree of the bypass flow passage.

The bypass flow passage is a flow passage connecting the third or fourth flow passage between the regulator and the flow rate adjuster to the third or fourth flow passage downstream of the flow rate adjuster. The bypass flow passage may be provided in either one of the third and fourth flow passages, or may be provided in both of the third and fourth flow passages. The bypass flow passage can be composed of known members such as a pipe and a branch pipe generally used in an SMB device.

The bypass flow rate adjuster is provided so as to correspond to the bypass flow passage. The bypass flow rate adjuster is not particularly limited, so long as it is an instrument capable of adjusting the opening degree of the bypass flow passage so that the flow rate of a mobile phase in the bypass flow passage becomes a desired flow rate. Examples of the bypass flow rate adjuster include the above-mentioned flow rate adjusting valve and the above-mentioned flow rate setting unit of a rotation selection system.

In the case of further providing the bypass flow passage and the bypass flow rate adjuster, it is possible to adjust the flow rate of a mobile phase in the bypass flow passage by using another control device. However, the above-mentioned flow rate control device is preferably a device for further adjusting the opening degree of the bypass flow passage with the bypass flow rate adjuster so that the flow rate of a mobile phase in the third or fourth flow passage downstream of the connection position on the downstream side between the third or fourth flow passage and the bypass flow passage becomes the above-mentioned predetermined flow rate, in terms of the simplification of the SMB device.

In the adjustment of the flow rate of a mobile phase further using the bypass flow passage and the bypass flow rate adjuster, it is preferable to roughly adjust the flow rate of a mobile phase with the flow rate adjuster and finely adjusting the flow rate of a mobile phase with the bypass flow rate adjuster, in terms of the further enhancement of a precision of the adjustment of the flow rate of a mobile phase in the third or fourth flow passage.

Examples of such an adjustment of the flow rate of a mobile phase include the adjustment of the flow rate of a mobile phase using both the flow rate adjuster and the bypass flow rate adjuster at all times and the adjustment of the flow rate of a mobile phase appropriately using either of them in accordance with the operation of the SMB device.

An example of the method for adjusting the flow rate of a mobile phase using both of them at all times includes a method for adjusting the value at an integer place of a numerical value of the flow rate of a mobile phase with the flow rate adjuster, and adjusting the value at a decimal place of a numerical value of the flow rate of a mobile phase with the bypass flow rate adjuster. Further, an example of the method for adjusting the flow rate of a mobile phase appropriately using either of them includes a method for adjusting the flow rate of a mobile phase in the third or fourth flow passage to a flow rate set with the flow rate adjuster at the start of an operation of the SMB device, and adjusting the flow rate of a mobile phase in the third or fourth flow passage with the bypass flow rate adjuster so that the pressure at a certain point in the flow passage of a mobile phase (for example, certain point in the endless flow passage) becomes constant during the operation of separating a target substance in the SMB device. The flow rate of a mobile phase can be adjusted so that the pressure at a certain point in the flow passage of a mobile phase becomes constant, by using a known technique such as a control method described, for example, in JP 60-32482 B.

Such an adjustment of the flow rate of a mobile phase can be conducted by a structure in which the flow rate of a mobile phase per unit time in the bypass flow passage is smaller than that of a mobile phase per unit time in the third or fourth flow rate, for example, a bypass flow passage with a cross-sectional area smaller than that of the third or fourth flow passage, a bypass flow rate adjuster of high precision capable of adjusting the flow rate of a mobile phase more precisely, compared with the flow rate adjuster.

The SMB device of the present invention may further comprise a concentrator for concentrating a mobile phase in the third and fourth flow passages corresponding to the third and fourth flow passages, and a regulating device for regulating the composition of a condensate of vapor of a mobile phase obtained in the concentrator to the composition of a mobile phase, and may be configured so that a mobile phase regulated in the regulating device is supplied to the first flow passage.

The concentrator is not particularly limited, so long as it is capable of evaporating a solvent in a mobile phase and generating a concentrated liquid containing a target substance. An example of such a concentrator includes a plurality of evaporators connected in series, which are known to be used in an SMB device.

The regulating device is not particularly limited, so long as it is capable of supplying an appropriate amount of a desired solvent to a condensate obtained from the concentrator in accordance with the composition of the condensate. An example of such a regulating device includes a device, as illustrated in U.S. Patent No. 6325898 as a regulating device, having a regulating tank receiving a mobile phase to be regulated for a composition thereof, a detector detecting the composition of the mobile phase supplied to the regulating tank, a feed tank receiving a solvent to be fed to the mobile phase supplied to the regulating tank, and a control device for feeding controlling the feed of a solvent from the feed tank in accordance with the detection results of the detector. The composition of the condensate in the regulating device can be regulated, using a calibration curve prepared in advance in accordance with components in the mobile phase. Further, as the detector, an appropriate device such as an infrared spectroscopic device can be used in accordance with the composition of the mobile phase.

The mobile phase regulated in the regulating device can be supplied to the above-mentioned first flow passage, for example, by connecting a discharge flow passage for discharging the regulated mobile phase from the regulating device to the first flow passage via a pump and a valve, if required.

The SMB device of the present invention may further comprise elements other than that described above. Examples of the other elements include a flow direction controlling appliance for controlling the flow direction of a mobile phase in the endless flow passage and a purifying device for purifying the regulated mobile phase. Examples of the flow direction controlling appliance include a check valve and a pump, provided so as to permit the flow of the mobile phase in one direction in the endless flow passage. Further, examples of the purifying device include a distillation device as shown in JP 06-239767 A and an adsorption tower receiving an adsorbent such as activated carbon.

Further, in the SMB device of the present invention, various kinds of devices and members can be appropriately provided, such as a thermometer detecting the temperature of a mobile phase in each flow passage and a tank, a level gauge detecting the amount of a mobile phase in a tank, a valve and a pump provided in each flow passage, and a condenser condensing a component distilled from the concentrator by cooling.

Although the target substance is not particularly limited, the present invention can be preferably applied to the separation and production of a target substance in which the fractionation of a target substance at a high purity is desirable. For example, the present invention can be preferably used in the case where the sample is a mixture of optical isomers such as a racemic body, and the optical isomer which requires a product of high quality is a target substance.

In the case where a target substance is an optical isomer, although a separating agent received in the column is not particularly limited so long as it is capable of separating an optical isomer, it is preferably a polysaccharide or a polysaccharide derivative capable of separating an optical isomer.

The polysaccharide is not particularly limited so long as it is an optically active polysaccharide, and may be any one of a synthetic polysaccharide, a natural polysaccharide, and a natural substance denatured polysaccharide. The polysaccharide is preferably a polysaccharide with a high regularity of a bonding form, and a chain polysaccharide is preferable. As the polysaccharide, although various polysaccharides can be exemplified, cellulose and amylose are particularly preferable.

The polysaccharide derivative is not particularly limited, so long as it is a compound having the polysaccharide and a functional group acting advantageously on the separation of an optical isomer that is a target substance. The polysaccharide derivative is preferably any one selected from an ester derivative of cellulose, a carbamate derivative of cellulose, an ester derivative of amylose, and a carbamate derivative of amylose. Examples of the polysaccharide derivative include various polysaccharide derivatives described in International Publication No. 95/23125.

The separating agent itself may be received in a column pipe, or the separating agent may be recieved in a column pipe under the condition of being carried on an appropriate carrier. The separating agent is used, for example, by being formed in a particle shape or carried on a particle-shaped carrier such as silica, being formed as a monolith received in a column pipe, or being carried on a porous monolith such as a silica rod. The generation of a separating agent in those forms and the carrying of a separating agent on a carrier can be conducted, using a known technique, such as carrying by physical adsorption and carrying by direct or indirect chemical bonding between a carrier and a separating agent.

The sample is not particularly limited, so long as it is a solution of a composition containing the above-mentioned target substance. Although a solvent for a sample is preferably a mobile phase, another solvent such as another organic solvent may be used.

The mobile phase is appropriately selected in accordance with various conditions such as the kind of the separating agent and the kind of the target substance. As the mobile phase, a solvent generally used in an SMB device, such as an organic solvent, water, and a mixed solution thereof, can be used.

Examples of the organic solvent include ethanolamine; lower alcohols such as methanol, ethanol, and isopropyl alcohol; solvents with a low polarity such as normal hexane; polar solvents such as acetonitrile and ethyl acetate; mixed solvents thereof; acidic solvents such as acetic acid; and basic solvents such as diethylamine.

Although the mixed ratio of the mixed solvent is not particularly limited, the volume ratio between a first solvent and a second solvent (first solvent:second solvent) is preferably 10:90 to 50:50, in terms of the optimization of an elution time of a target substance and the satisfactory separation. The contents of the acidic solvent and the basic solvent are preferably 0.01 to 0.5% by volume, and more preferably 0.01 to 0.2% by volume with respect to the entire mobile phase, in terms of the stabilization of a target substance and the suppression of adverse effects on a separating agent.

Hereinafter, the present invention will be described in more detail by way of embodiments with reference to the drawings.

### (First Embodiment)

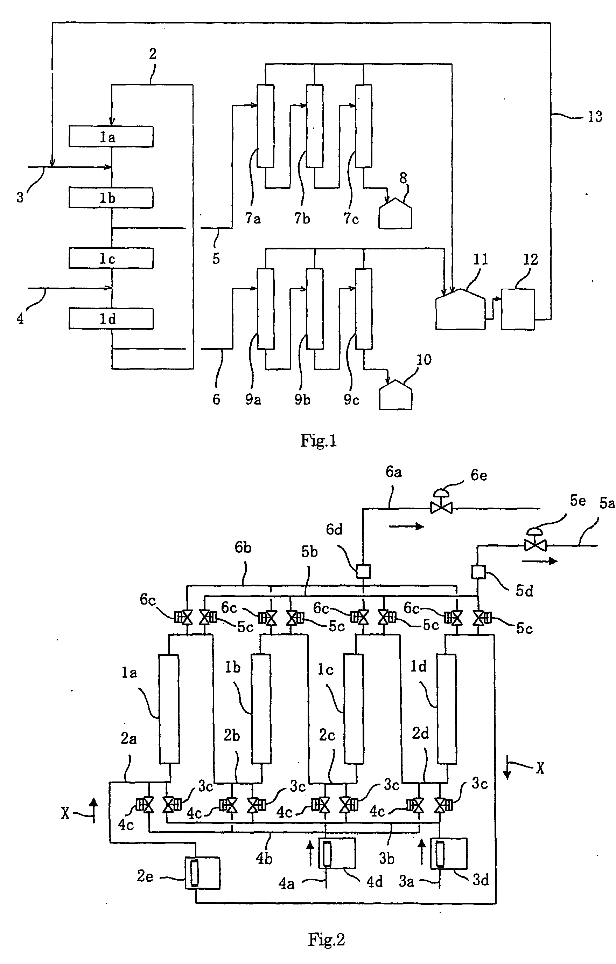

As shown in FIG. 1, the SMB device of the present embodiment comprises an endless flow passage 2 formed by connecting of four columns 1a to 1d in series, a first flow passage 3 connected for supplying a mobile phase to the endless flow passage 2, a second flow passage 4 connected for supplying a sample to the endless flow passage 2, third and fourth flow passages 5 and 6 for discharging a mobile phase from the endless flow passage 2, connected to the endless flow passage 2, three evaporators 7a to 7c connected in series so as to concentrate a mobile phase in the third flow passage 5 in the third flow passage 5, a reservoir tank 8 for receiving bottoms of the evaporator 7c, three evaporators 9a to 9c connected in series so as to concentrate a mobile phase in the fourth flow passage 6 in the fourth flow passage 6, a reservoir tank 10 for receiving bottoms of the evaporator 9c, a collecting tank 11 for receiving a distillate component from each evaporator, connected to each top portion of the evaporators 7a to 7c and 9a to 9c, a regulating device 12 for regenerating a mobile phase by regulating the composition ratio of components of a condensate received in the collecting tank 11, and a mobile phase supply flow passage 13 connecting the regulating device 12 to the first flow passage 3.

As shown in FIG. 2, the endless flow passage 2 is formed with four columns 1a to 1d and connecting flow passages 2a to 2d connecting the columns 1a to 1d in series. The connecting flow passage 2a is provided with a circulating pump 2e for allowing a fluid in the endless flow passage 2 to flow in a direction of the arrow X of FIG. 2.

The first flow passage 3 comprises a main pipe 3a, a branch pipe 3b connecting the main pipe 3a to each of the connecting flow passages 2a to 2d, and four valves 3c for opening/closing each branch line of the branch pipe 3b. The main pipe 3a is provided with a mobile phase pump 3d that is a metering pump for supplying a mobile phase toward the endless flow passage 2.

In the same way as in the first flow passage 3, the second flow passage 4 also comprises a main pipe 4a, a branch pipe 4b connecting the main pipe 4a to each of the connecting flow passages 2a to 2d, and four valves 4c for opening/closing each branch line of the branch pipe 4b, and the main pipe 4a is provided with a stock solution pump 4d that is a metering pump for supplying a sample toward the endless flow passage 2.

The third flow passage 5 also comprises a main pipe 5a, a branch pipe 5b connecting each of the connecting flow passages 2a to 2d to the main pipe 5a, and four valves 5c for opening/closing each branch line of the branch pipe 5b. When the endless flow passage 2 side is defined as an upstream side, the main pipe 5a is provided with a regulator 5d and a flow rate control valve 5e as the flow rate adjuster for opening/closing the main pipe 5a downstream of the regulator 5d.

In the same way as in the third flow passage 5, the fourth flow passage 6 also comprises a main pipe 6a, a branch pipe 6b connecting each of the connecting flow passages 2a to 2d to the main pipe 6a, and four valves 6c for opening/closing each branch line of the branch pipe 6b. The main pipe 6a is also provided with a regulator 6b and a flow rate control valve 6e as the flow rate adjuster for opening/closing the main tube 6a downstream of the regulator 6d.

As the regulators 5d, 6d, for example, a two-stage type regulator of "KCY" series produced by Swagelok (Registered Trademark) Company can be used. This regulator comprises a flow passage passing through the body of the regulator, a first pressure regulating portion that communicates/disconnects the flow passage in the regulator in accordance with a first set pressure, and a second pressure regulating portion that is provided downstream of the first pressure regulating portion and communicates/disconnects the flow passage in the regulator in accordance with a second set pressure. The first and second pressure regulating portions include a diaphragm that is operated so as to allow the flow passage in the regulator to be communicated or disconnected, a screw that is screwed in the body of the regulator to proceed/retract with respect to the diaphragm, and a pressure regulating spring one end of which comes into contact with the tip end of the screw and the other end of which comes into contact with the diaphragm, and which pushes the diaphragm in a direction in which the diaphragm disconnects the flow passage in the regulator.

The main pipes 5a, 6a downstream of the flow rate control valves 5e, 6e are provided with a flowmeter (not shown). Further, the SMB device of the present embodiment is provided with a control device (not shown) controlling the opening/closing of the valves 3c to 6c, the opening/closing of the flow rate control valves 5e, 6e, and the operation of the mobile phase pump 3d and the stock solution pump 4d. The opening/closing of the flow rate control valves 5e, 6e is controlled with the control device, in accordance with a detected value of the flowmeter and a previously set value of the flow rate of the mobile phase in the main pipes 5a, 6a. The operation of the mobile phase pump 3d and the stock solution pump 4d is controlled with the control device, in accordance with the relationship between the flow rate of the mobile phase in the third flow passage 5 and the fourth flow passage 6, and the mobile phase and the sample in the first flow passage 3 and the second flow passage 4.

In the regulators 5d, 6d, appropriate first and second set pressures are set in the above-mentioned first and second pressure regulating portions so that the pressures of the main pipes 5a, 6a downstream of the regulators 5d, 6d become, for example, 0.5 to 2 MPa, in accordance with the projecting length of the screw in the diaphragm direction.

Further, the columns 1 to 4 are assumed to be filled with a particle-shaped filler made of silica particles and a polysaccharide derivative such as carbamate derivative of amylose carried on the silica particles. Further, the sample is assumed to be a solution of a racemic body of an optical isomer. Further, the target substance is assumed to be an optical isomer used in medical purposes. Further, the mobile phase is assumed to be a mixed solvent containing methanol and acetonitrile, and amine in a trace amount with respect thereto. The valves 3c to 6c are assumed to be all closed.

When the valve 3c with respect to the connecting flow passage 2b is opened, a mobile phase is quantitatively supplied from the first flow passage 3 to the endless flow passage 2. Further, when the valve 4c with respect to the connecting flow passage 2d is opened, a liquid sample is quantitatively supplied from the second flow passage 4 to the endless flow passage 2. In the endless flow passage 2, supplied mobile phase and sample are fed in a direction represented by an arrow X by the circulating pump 2e.

When the valve 5c with respect to the connecting flow passage 2c is opened, a mobile phase is discharged from the endless flow passage 2 to the third flow passage 5. Further, when the valve 6c with respect to the connecting flow passage 2a is opened, a mobile phase is discharged from the endless flow passage 2 to the fourth flow passage 6.

The sample supplied to the endless flow passage 2 moves in the column 1b gradually in a direction in which the mobile phase flows, while repeating adsorption and desorption with respect to the separating agent in the column 1b. A component (extract) in the sample, which is more likely to adsorb the separating agent, moves more slowly in the column 1b, and a component (raffinate) in the sample, which is less likely to adsorb the separating agent, moves more quickly in the column 1b.

When the extract and the raffinate pass through the column 1b, the connection position of each flow passage with respect to the endless flow passage 2 is switched to the downstream side by one column in the direction in which a mobile phase flows in the endless flow passage 2, while the relative positional relationship of the connection position of each flow passage with respect to the endless flow passage 2 is kept.

More specifically, regarding the first flow passage 3, the valve 3c with respect to the connecting flow passage 2b is closed and the valve 3c with respect to the connecting flow passage 2c is opened. Further, regarding the second flow passage 4, the valve 3c with respect to the connecting flow passage 2d is closed, and the valve 3c with respect to the connecting flow passage 2a is opened. Further, regarding the third flow passage 5, the valve 3c with respect to the connecting flow passage 2c is closed, and the valve 3c with respect to the connecting flow passage 2d is opened. Further, regarding the fourth flow passage 6, the valve 3c with respect to the connecting flow passage 2a is closed, and the valve 3c with respect to the connecting flow passage 2b is opened.

When a time during which the extract and the raffinate pass through the column 1b is one period, the above-mentioned switching of the flow passage is performed for each period. The time during which the extract and the raffinate pass through the column 1b may be obtained, for example, by collecting and analyzing a mobile phase from the connecting flow passage 2c, or may be calculated from a simulated experiment by a computer.

When several periods elapse, in the endless flow passage 2, the raffinate is unevenly distributed and concentrated in the endless flow passage 2 downstream of the connection position of the second flow passage 4, and the extract is unevenly distributed and concentrated in the endless flow passage 2 upstream of the connection position of the second flow passage 4. Then, the mobile phase containing the extract starts being discharged to the third flow passage 5, and the mobile phase containing the raffinate starts being discharged to the fourth flow passage 6.

In the endless flow passage 2, by continuing the switching of each flow passage for each period, the sample is quantitatively and continuously supplied to the endless flow passage 2, and the extract or the raffinate to be a product is quantitatively and continuously discharged from the endless flow passage 2.

In the third flow passage 5, the regulator 5d opens/closes the third flow passage 5 in accordance with the pressure set as a pressure of the third flow passage 5 downstream of the regulator 5d. In the case where the pressure in the main pipe 5a between the regulator 5d and the flow rate control valve 5e is higher than the above-mentioned set pressure, the flow passage in the regulator is closed. In the case where the pressure in the main pipe 5a between the regulator 5d and the flow rate control valve 5e is lower than the set pressure, the flow passage in the regulator is opened. Thus, the opening/closing of the regulator 5d is performed only with a pressure downstream of the regulator 5d, so the pressure in the main pipe 5a between the regulator 5d and the flow rate control valve 5e is regulated to be constant at the set pressure, irrespective of the variation in a pressure caused by the pulsation in the endless flow passage 2 or the like.

Since the pressure in the main pipe 5a between the regulator 5d and the flow rate control valve 5e is regulated to be constant as the set pressure, the third flow passage 5 downstream of the flow rate control valve 5e is supplied with a mobile phase in a predetermined flow passage in accordance with the opening degree of the flow rate control valve 5e. The flow rate of a mobile phase in the third flow passage 5 downstream of the flow rate control valve 5e is detected with the flowmeter. The value detected by the flowmeter is input to the control device. The control device adjusts the opening degree of the flow rate control valve 5e in accordance with the detected value to be input and the previously stored set value. Thus, the flow rate of a mobile phase in the third flow passage 5 downstream of the flow rate control valve 5e is controlled to a set flow rate.

Similarly, in the fourth flow passage 6, the regulator 6d opens/closes the fourth flow passage 6, in accordance with the pressure set as a pressure of the fourth flow passage 6 downstream of the regulator 6d. In the case where the pressure in the main pipe 6a between the regulator 6d and the flow rate control valve 6e is higher than the second set pressure, the flow passage in the regulator is closed. In the case where the pressure in the main pipe 6a between the regulator 6d and the flow rate control valve 6e is lower than the set pressure, the flow passage in the regulator is opened. Thus, the opening/closing of the regulator 6d is performed only with the pressure downstream of the regulator 6d, so the pressure in the main pipe 6a between the regulator 6d and the flow rate control valve 6e is regulated to be constant at the set pressure, irrespective of the variation in a pressure caused by the pulsation in the endless flow passage 2 or the like.

Since the pressure in the main pipe 6a between the regulator 6d and the flow rate control valve 6e is regulated to be constant at the set pressure, the fourth flow passage 6 downstream of the flow rate control valve 6e is supplied with a mobile phase in a predetermined flow passage in accordance with the opening degree of the flow rate control valve 6e. The flow rate of the mobile phase in the fourth flow passage 6 downstream of the flow rate control valve 6e is detected with the flowmeter. The value detected by the flowmeter is input to the control device. The control device adjusts the opening degree of the flow rate control valve 6e in accordance with the detected value to be input and the previously stored set value. Thus, the flow rate of the mobile phase in the fourth flow passage 6 downstream of the flow rate control valve 6e is controlled to be a set flow rate.

The mobile phase discharged to the third flow passage 5 is successively fed from the evaporator 7a to the evaporator 7c, and concentrated in stages. The bottoms of the evaporator 7c is a concentrated liquid of the mobile phase containing the extract in a high concentration, and received in the reservoir tank 8.

Similarly, the mobile phase discharged to the fourth flow passage 6 is successively fed from the evaporator 9a to the evaporator 9c, and concentrated in stages. The bottoms of the evaporator 9c is a concentrated liquid containing the raffinate in a high concentration, and received in the reservoir tank 10.

The components distillated from top portions of the evaporators 7a to 7c and the evaporators 9a to 9c are received in the collecting tank 11 as a condensate. The condensate received in the collecting tank 11 is supplied to the regulating device 12. In the regulating device 12, the components in the supplied condensate are quantitatively detected, and an appropriate solvent is supplied to the condensate, if required, so the composition of the condensate becomes the same as that of the mobile phase. The condensate with the composition regulated is supplied to the first flow passage 3 via the mobile phase supply flow passage 13, and reused as a mobile phase.

The SMB device in the present embodiment comprises the endless flow passage 2 formed with the columns 1a to 1d and the connecting flow passages 2a to 2d, the first to fourth flow passages 3 to 6, the regulators 5d, 6d, the flow rate control valves 5e, 6e, the above-mentioned flowmeter, and the above-mentioned control device, so the SMB device is capable of controlling the flow rate of a mobile phase discharged from the endless flow passage 2 to the third and the fourth flow passages 5, 6 without using a metering pump. Thus, in the control of the flow rate of a mobile phase in the third and fourth flow passages 5, 6, the setting and consumption of the metering pump are not required, so excellent durability can be realized with a simple structure and the initial cost and running cost can be reduced, compared with that of a conventional SMB device.

Further, the SMB device of the present embodiment further comprises the evaporators 7a to 7c and 9a to 9c, the collecting tank 11, the regulating device 12, and the mobile phase supply flow passage 13, so the SMB device is capable of reusing a mobile phase discharged from the endless flow passage 2 as a new mobile phase for optical resolution. Thus, compared with the case where a mobile phase is used once and then discarded, the use amount of a solvent used in a mobile phase and the cost for the solvent can be further reduced.

Further, in the SMB device of the present embodiment, the columns 1a to 1d are columns filled with a separating agent the silica particles carrying a carbamate derivative of amylose, so the SMB device is capable of separating an optical isomer exactly and quickly. Thus, an optical isomer used in medicine or the like can be produced with a high productivity.

Further, the SMB device of the present embodiment further comprises the regulating device 12, so the SMB device can use a mobile phase containing a trace amount of solvent such as the above-mentioned amine. Thus, an optical isomer can be more exactly separated in a more stabilized state, depending upon the property and the kind of the optical isomer, and an optical isomer can be produced with a much higher productivity, so even a product with more strict process management can be produced with a high productivity.

### (Second Embodiment)

As shown in FIG. 3, the SMB device of the present embodiment further comprises bypass pipes 5f and 6f and bypass flow rate control valves 5g and 6g, in addition to the SMB device of the first embodiment.

The bypass pipe 5f is a pipe connecting the main pipe 5a between the regulator 5d and the flow rate control valve 5e to the main pipe 5a downstream of the flow rate control valve 5e, which is the bypass flow passage in the present invention. The bypass flow rate control valve 5g is a valve opening/closing the bypass pipe 5f, which is the bypass flow rate adjuster in the present invention. The bypass flow rate control valve 5g is designed to be a valve, for example, the opening degree of which can be adjusted more precisely, compared with the flow rate control valve 5e. An example of the combination of the flow rate control valve 5e and the bypass flow rate control valve 5g includes a combination of a ball valve and a needle valve.

Further, the bypass pipe 6f is a pipe connecting the main pipe 6a between the regulator 6d and the flow rate control valve 6e to the main pipe 6a downstream of the flow rate control valve 6e, which is the bypass flow passage in the present invention. The bypass flow rate control valve 6g is a valve opening/closing the bypass pipe 6f, which is the bypass flow rate adjuster in the present invention. The bypass flow rate control valve 6g is designed to be a valve, the opening of which can be adjusted more precisely, compared with the flow rate control valve 6e. An example of the combination between the flow rate control valve 6e and the bypass flow rate control valve 6g includes a combination of a ball valve and a needle valve.

The flowmeter is set in the main pipes 5a, 6a downstream of the flow rate control valves 5e, 6e, and further downstream of the connection position between the bypass pipes 5d, 6d and the main pipes 5a, 6a. Further, the control device is also connected to the bypass flow rate control valves 5g, 6g, and controls the opening/closing of the bypass flow rate control valves 5g, 6g based on the value detected by the flowmeter and the set value.

The mobile phase regulated to the above-mentioned set pressure by the regulator 5d is supplied to the main pipe 5a downstream of the regulator 5d and the bypass pipe 5f. Thus, the third flow passage 5 downstream of the flow rate control valve 5e is supplied with a mobile phase in a predetermined flow passage in accordance with the opening degrees of the flow rate control valve 5e and the bypass flow rate control valve 5g. Similarly, the mobile phase regulated to the above-mentioned set pressure by the regulator 6d is supplied to the main pipe 6a downstream of the regulator 6d and the bypass pipe 6f. Thus, the fourth flow passage 6 downstream of the flow rate control valve 6e is supplied with a mobile phase in a predetermined flow passage in accordance with the opening degrees of the flow rate control valve 6e and the bypass flow rate control valve 6g.

For example, when controlling the mobile phase in the third flow passage 5 to be a set value, the control device controls the value at an integer place of the flow rate of the mobile phase by opening/closing the flow rate control valve 5e, and controls the value at the first decimal place and less of the flow rate of the mobile phase by opening/closing the valve 5f. Similarly, for example, when controlling the mobile phase in the fourth flow passage 6 to be a set value, the control device controls the value at an integer place of the flow rate of the mobile phase by opening/closing the flow rate control valve 6e, and controls the value at the first decimal place and less of the flow rate of the mobile phase by opening/closing the valve 6f. Thus, the flow rate of the mobile phase in the third and fourth flow passages 5, 6 can be controlled much more precisely.

The SMB device in the present embodiment exhibits additional effects capable of controlling the flow rate of a mobile phase in the third and fourth flow passages 5, 6 much more precisely, in addition to the effects in the first embodiment. Thus, the SMB device of the present embodiment is much more effective in terms of the separation of a sample under more strict separation conditions and the production of a product requiring more strict process management.

## Claims

1. A simulated moving bed chromatographic separation device, comprising:
an endless flow passage comprising a plurality of columns for separating a target substance in a sample comprising the target substance and connecting flow passages for connecting the columns in series;
a first flow passage capable of being connected to any one of the connecting flow passages in the endless flow passage, for supplying a mobile phase to the endless flow passage;
a second flow passage capable of being connected to any one of the connecting flow passages in the endless flow passage, for supplying the sample to the endless flow passage; and
a third flow passage and a fourth flow passage capable of being connected to any one of the connecting flow passages in the endless flow passage, for discharging the mobile phase from the endless flow passage,
the simulated moving bed chromatographic separation device being used for obtaining the target substance by discharging a mobile phase comprising the target substance from the endless flow passage via one of or both of the third flow passage and the fourth flow passage, wherein:
in a case where the endless flow passage side is set to upstream of the third flow passage and the fourth flow passage, the simulated moving bed chromatographic separation device further comprises: a regulator provided to each of the third flow passage and the fourth flow passage, for regulating a pressure of the third flow passage or the fourth flow passage; and a flow rate control device provided to each of the third flow passage and the fourth flow passage, for controlling a flow rate of the mobile phase in the third flow passage or the fourth flow passage downstream of the regulator;
the regulator serves as a device for opening/closing the third flow passage or the fourth flow passage so that the pressure of the third flow passage or the fourth flow passage downstream of the regulator becomes a pressure set in advance; and
the flow rate control device serves as a device comprising a flow rate adjuster for adjusting an opening degree of the third flow passage or the fourth flow passage downstream of the regulator, for adjusting the opening degree of the third flow passage or the fourth flow passage by the flow rate adjuster so that the flow rate of the mobile phase in the third flow passage or the fourth flow passage downstream of the flow rate adjuster becomes a flow rate set in advance.

2. The simulated moving bed chromatographic separation device according to claim 1, further comprising a bypass flow passage for connecting the third flow passage or the fourth flow passage between the regulator and the flow rate adjuster to the third flow passage or the fourth flow passage downstream of the flow rate adjuster, and a bypass flow rate adjuster for adjusting an opening degree of the bypass flow passage, provided one of or both of the third flow passage and the fourth flow passage,
wherein the flow rate control device serves as a device for further adjusting the opening degree of the bypass flow passage with the bypass flow rate adjuster so that the flow rate of the mobile phase in the third flow passage or the fourth flow passage downstream of a downstream connection position of connecting positions of the third flow passage or the fourth flow passage and the bypass flow passage becomes the flow rate set in advance.

3. The simulated moving bed chromatographic separation device according to claim 1 or 2, further comprising:
a concentrator for concentrating the mobile phase in the third flow passage and the fourth flow passage corresponding to the third flow passage and the fourth flow passage; and
a regulating device for regulating a composition of a condensate of vapor of the mobile phase obtained in the concentrator to a composition of the mobile phase,
wherein a mobile phase regulated in the regulating device is supplied to the first flow passage.

4. The simulated moving bed chromatographic separation device according to any one of claims 1 to 3, wherein:
the target substance comprises an optical isomer;
the column has a separating agent comprising a polysaccharide derivative for separating the optical isomer from a mixture of the optical isomer; and
the polysaccharide derivative is selected from the group consisting of an ester derivative of cellulose, an ester derivative of amylose, a carbamate derivative of cellulose, and a carbamate derivative of amylose.
